# EUROPEAN PATENT APPLICATION

(11) **EP 4 760 650 A2**
(43) Date of publication of application: **17.06.2026**
(21) Application number: 26176117.5
(22) Date of filing: 14.12.2023
(51) Int. Cl.: G06V 10/62

(54) **GENERATING A TRAJECTORY FOR AN AUTONOMOUS VEHICLE**

(30) Priority: 21.12.2022 GB 202219428
(62) Divisional of application: 23828447.5
(71) Applicant: Oxa Autonomy Ltd, Oxford OX4 2HW (GB)
(72) Inventor: UPCROFT, Ben, Oxford, OX4 2HW (GB); ENGLISH, Andrew, Oxfo, OX4 2HW (GB); TONG, Chi, Oxford, OX4 2HW (GB)
(74) Representative: Appleyard Lees IP LLP

(57) **Abstract**

The subject-matter of the present disclosure relates to a computer-implemented method of training an end-to-end network of an autonomy stack of an AV to generate a trajectory for the AV from sensor inputs. The computer-implemented method comprises: providing an end-to-end network comprising a plurality of serially connected portions; generating a plurality of ground truths; and training each portion of the end-to-end network using a different ground truth of the plurality of ground truths.

## Description

### FIELD

The subject-matter of the present disclosure relates to trajectory generation and control of autonomous vehicles. More specifically, the subject-matter relates to computer-implemented methods of generating a trajectory for an autonomous vehicle, training a machine learning model to generate the trajectory.

### BACKGROUND

Typical autonomy stacks include various components, or modules, that are rules based. It is difficult and time consuming to extend such autonomy stacks to new operating domains as the resulting rules-based modules will be extremely complex. It is possible to extend the functionality of autonomy stacks to new domains more easily using data based, or learned, models in the autonomy stack. However, there are drawbacks of constructing an autonomy stack entirely from learned models. For example, the black box nature of learned models means failure modes may be difficult to diagnose, and the outputs for the learned models may be difficult to predict and sometimes may be unreliable.

It is an aim of the present invention to address such problems and improve on the prior art.

### SUMMARY

According to an aspect of the present disclosure, there is provided a computer-implemented method of generating a trajectory for an autonomous vehicle, AV, using an autonomy stack, the autonomy stack including an end-to-end network trained to generate a trajectory for the AV from sensor inputs, a tracking module and a planning module, the computer-implemented method comprising: receiving, by the tracking module, a plurality of objects identified based on sensor inputs; fusing, by the tracking module, the plurality of objects; and generating, using the planning module, a further trajectory for the AV based on the fused plurality of objects and the trajectory generated by the end-to-end network.

In this way, the trajectory from the end-to-end network is used as a seed by the planning module the generate the further trajectory rather than outputting the trajectory directly. Therefore, the benefits of machine learning are realised without suffering many of the draw-backs.

In an embodiment, the receiving the plurality of objects may comprise: generating, using an object identification portion of the end-to-end network, a plurality of occupancy grids from sensor inputs; extracting, from a hidden layer at an end of the object identification portion of the end-to-end network, the plurality of occupancy grids; and extracting the plurality of objects from the plurality of occupancy grids.

In an embodiment, the generating, using the object identification portion of the end-to-end network, the plurality of occupancy grids, may comprise: populating each segment of a plurality of segments of each occupancy grid with a state, wherein the state may be selected from a list of states including: obstacle, occlusion, an object including its semantic class and its velocity, road, and pavement.

In an embodiment, the computer-implemented method may further comprise: marking, using the object identification portion of the end-to-end network, a lane boundary and/or a bounding box around the object.

In an embodiment, the object identification portion of the end-to-end network may comprise a vision portion, a LiDAR portion, and a RADAR portion, and wherein the sensor inputs include images, laser point cloud, and a LiDAR point cloud, wherein the generating, using the object identification portion of the end-to-end network, the plurality of occupancy grids may comprise: identifying, using the vision portion, a first occupancy grid of the plurality of occupancy grids from the images; identifying, using the LiDAR portion, a second occupancy grid of the plurality of occupancy grids from the LiDAR point cloud; and identifying, using the RADAR portion, a third occupancy grid of the plurality of occupancy grids from the RADAR point cloud.

In an embodiment, the computer-implemented method may further comprise: fusing, using a temporal fusion portion of the end-to-end network, the first, second, and third, occupancy grids; and extracting a plurality of objects from the occupancy grid fused by the temporal fusion portion, wherein the fusing, by the tracking module, the plurality of objects may further comprise fusing, by the tracking module, the plurality of objects extracted from the plurality of occupancy grids, and the plurality of objects extracted from the occupancy grid fused using the temporal fusion portion of the end-to-end network.

In this way, the fused objects from the temporal fusion portion of the end-to-end network acts as a seed showing an example of a final result of fusing objects to aid the tracking module in fusing the sensor inputs.

In an embodiment, the autonomy stack may include a prediction module, wherein the computer-implemented method may further comprise: generating, using the prediction module, future states of the plurality of objects based on the fused objects from the tracking module, wherein the generating, using the planning module, a further trajectory for the AV based on the fused plurality of objects and the trajectory generated by the end-to-end network may comprise: generating, using the planning module, the further trajectory for the AV using the trajectory and the future states of the plurality of objects from the prediction module, wherein the future states may include future object position and future object velocity.

In an embodiment, the computer-implemented method may further comprise: generating, using a prediction portion of the end-to-end network, future states of the fused occupancy grids from the object identification portion; extracting future states of a plurality of objects from the future states of the fused occupancy grids; and generating, using a planning portion of the end-to-end network, the trajectory from the future states of the fused occupancy grids, wherein the generating, using the prediction module, future states of the plurality of objects from the tracking module may comprise: generating, using the prediction module, future states of the plurality of objects from the plurality of objects fused by the tracking module and the future states of the plurality of objects extracted from the future states of the plurality of objects from the prediction portion of the end-to-end network.

The future states of the fused objects generated by the prediction portion of the end-to-end network are used as a seed by the prediction module so the prediction module is guided towards the future state identified by the end-to-end network.

In an embodiment, the prediction module may be a rules-based model and/or the tracking module may be a rules-based model, and/or the planning module may be a rules-based model.

In this way, the method is able to realise the benefits of machine learning via the end-to-end network and predictability of results using the rules-based model.

In an embodiment, the autonomy stack may further comprise a control module, the computer-implemented method may further comprise: generating, using the control module, a control command based on the further trajectory, the control command configured to operate one or more actuators of the AV for moving the AV.

In an embodiment, the computer-implemented method may further comprise: generating, using an odometry module, a relative position of the AV, wherein, the fusing, by the tracking module, the plurality of objects may be based on the relative position of the AV, wherein the generating, using the prediction module, future states of the plurality of objects may be based on the relative position of the AV, wherein the generating, using the planning module, the further trajectory for the AV may be based on the relative position of the AV.

In an embodiment, the computer-implemented method may further comprise: generating, using a localisation module, a position of the AV, wherein, the fusing, by the tracking module, the plurality of objects may be based on the position of the AV, wherein the generating, using the prediction module, future states of the plurality of objects may be based on the position of the AV, wherein the generating, using the planning module, the further trajectory for the AV may be based on the position of the AV.

According to an aspect, there is provided a computer-implemented method of training an end-to-end network of an autonomy stack of an AV to generate a trajectory for the AV from sensor inputs. The computer-implemented method comprises: generating a trajectory for the AV based on sensor inputs; labelling the trajectory and the sensor inputs uses to generate the trajectory as paired data; and running the end-to-end network to generate the trajectory from the sensor inputs of the paired data; and modifying the end-to-end network to reduce an error between the trajectory generated by the end-to-end network and the trajectory of the paired data.

According to an aspect, there is provided a transitory, or non-transitory, computer-readable medium having instructions stored thereon that when executed by a processor, cause the processor to perform the computer-implemented method of any preceding aspect or embodiment.

According to an aspect, there is provided an autonomy stack for an autonomous vehicle, AV, the autonomy stack comprising: an end-to-end network trained to generate a trajectory for the AV from sensor inputs; a tracking module configured to receive a plurality of objects identified based on sensor inputs and to fuse the plurality of objects; and a planning module configured to generate a further trajectory for the AV based on the used plurality of objects and the trajectory generated by the end-to-end network.

According to an aspect, there is provided an autonomous vehicle including: storage having the non-transitory computer-readable medium of the preceding aspect, or the autonomy stack of the preceding aspect, stored thereon; a processor to execute the instructions or the autonomy stack; and one or more actuators configured to move the AV based on the further trajectory.

### BRIEF DESCRIPTION OF DRAWINGS

The subject-matter of the present disclosure is best described with reference to the accompanying figures, in which:
Figure 1 shows a schematic block diagram of an autonomous vehicle (AV) according to one or more embodiments;
Figure 2 shows a block diagram of an architecture of an autonomy stack for controlling the AV from Figure 1, according to one or more embodiments;
Figure 3 shows a flow chart of a computer-implemented method of generating a trajectory for the AV, using the autonomy stack from Figure 2, according to one or more embodiments; and
Figure 4 shows a flow chart of a computer-implemented method of training an end-to-end network of the autonomy stack from Figure 2, according to one or more embodiments.

### DESCRIPTION OF EMBODIMENTS

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

The embodiments described herein may be embodied as sets of instructions stored as electronic data in one or more storage media. Specifically, the instructions may be provided on a transitory or non-transitory computer-readable media. When executed by the processor, the processor is configured to perform the various methods described in the following embodiments. In this way, the methods may be computer-implemented methods. In particular, the processor and a storage including the instructions may be incorporated into a vehicle. The vehicle may be an autonomous vehicle (AV).

Whilst the following embodiments provide specific illustrative examples, those illustrative examples should not be taken as limiting, and the scope of protection is defined by the claims. Features from specific embodiments may be used in combination with features from other embodiments without extending the subject-matter beyond the content of the present disclosure.

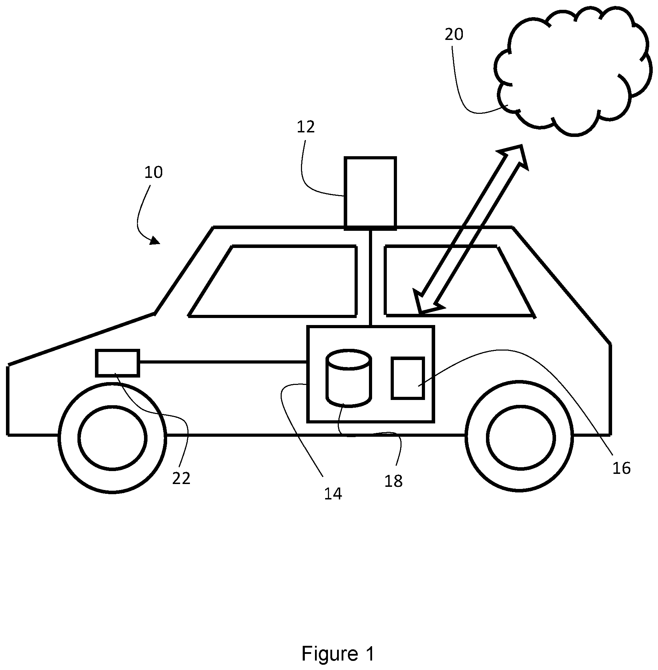

With reference to Figure 1, an AV 10 may include a plurality of sensors 12. The sensors 12 may be mounted on a roof of the AV 10, or integrated into the bumpers, grill, bodywork, etc. The sensors 12 may be communicatively connected to a computer 14. The computer 14 may be onboard the AV 10. The computer 14 may include a processor 16 and a memory 18. The memory may include the non-transitory computer-readable media described above. Alternatively, the non-transitory computer-readable media may be located remotely and may be communicatively linked to the computer 14 via the cloud 20. The computer 14 may be communicatively linked to one or more actuators 22 for control thereof to move the AV 10. The actuators may include, for example, a motor, a braking system, a power steering system, etc.

The sensors 12 may include various sensor types. Examples of sensor types include LiDAR sensors, RADAR sensors, and cameras. Each sensor type may be referred to as a sensor modality. Each sensor type may record data associated with the sensor modality. For example, the LiDAR sensor may record LiDAR modality data.

The data may capture various scenes that the AV 10 encounters. For example, a scene may be a visible scene around the AV 10 and may include roads, buildings, weather, objects (e.g. other vehicles, pedestrians, animals, etc.), etc.

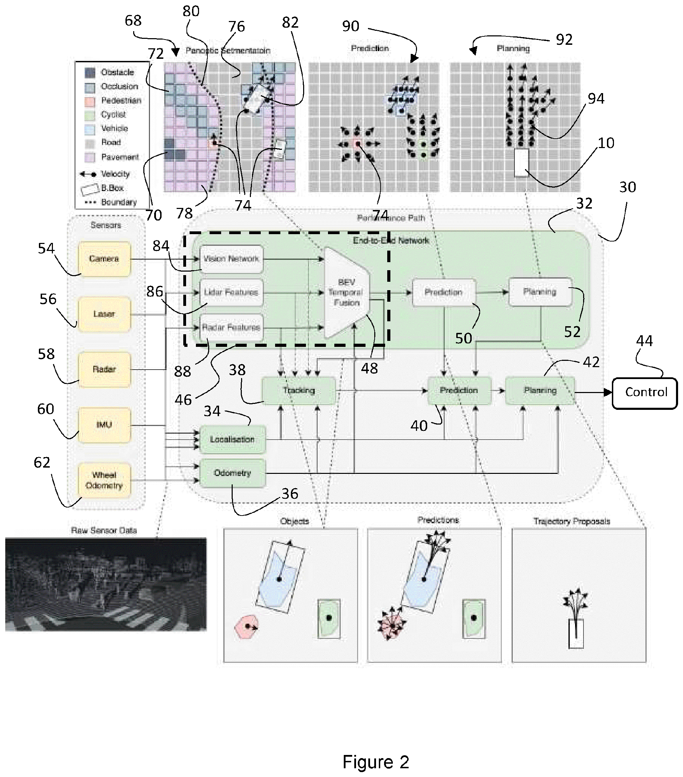

With reference to Figure 2, the instructions may be provided in the form of an autonomy stack 30. The autonomy stack includes an end-to-end network 32, a localisation module 34, an odometry module 36, a tracking module 38, a prediction module 40, a planning module 42, and a control module 44. The autonomy stack 30 is an autonomy stack for generating a trajectory of the AV 10, and optionally may also provide control to one or more actuators of the AV 10 to move the AV 10 based on the trajectory. In other embodiments, the control module 44 may be a separate component outside the autonomy stack 30.

The end-to-end network 32 is trained to generate a trajectory from sensor inputs. The end-to-end network 32 may be a neural network. The end-to-end network may include a plurality of serially arranged portions. The term serially arranged may mean arranged in series, or that an output layer from one portion provides inputs to an input layer of another portion. Each of the portions is thus defined by a plurality of layers of the neural network.

The plurality of portions includes an object identification portion 46, a prediction portion 50, and a planning portion 52.

The architecture may be best described in the form of a computer-implemented method.

The computer-implemented method may include generating, using the object identification portion 46, a plurality of objects from sensor inputs. The sensor inputs may be inputs of different sensor modalities. The sensor modalities may include data detected using a different sensor modality, including a camera 54, a laser or LiDAR sensor 56, a RADAR sensor 58, an inertial measurement unit (IMU) 60, and odometry 66, or more specifically, wheel odometry.

The method may comprise generating, using the localisation module 34, a localisation, or position, of the AV 10. The localisation may be based on a plurality of the sensor modalities.

The method may comprise generating, using the odometry module 36, a position of the AV 10. The position of the AV 10 may be generated based on the odometry 66 and optionally one or more of the other sensor modalities.

In generating the plurality of occupancy grids, the object identification portion 46 populates each segment of a plurality of segments of an occupancy grid 68 with a state. The occupancy grid may be a panoptic segmentation of an environment of the AV 10. Each state may be selected from a list of states including an obstacle 70, an occlusion 72, a semantic class of an object 74 occupying the segment together with its velocity estimation, a road 76, and a pavement 78. The semantic classes of object may include a vehicle, a pedestrian, a cyclist, an animal, etc.

The object identification portion 46 may mark a land boundary 80 on the occupancy grid 68. The lane boundary 80 may define an interface between a valid road path and a non-valid road path, e.g. an interface between the road 76 and the pavement 78 or sidewalk. The object identification portion 46 may mark a bounding box 82 around one or more of the objects. The bounding box 82 may be marked where there are two or more segments labelled with the same object. For example, the bounding box 82 may be drawn around a truck or lorry.

The object identification portion 46 may comprise a fusion portion 48, a vision portion 84, a LiDAR portion 86, and a RADAR portion 88, each trained to identify a set of the occupancy grids from inputs from one of the sensor modalities. For example, the method may comprise identifying, using the vision portion 84, a first occupancy grid of objects of the plurality of objects from images from the camera 54; identifying, using the LiDAR portion 86, a second occupancy grid of the plurality of occupancy grids from a LiDAR point cloud obtained from the LiDAR sensor 56; and identifying, using the RADAR portion 88, a third occupancy grid of the plurality of occupancy grids from a RADAR point cloud from the RADAR sensor 58.

The method may comprise fusing, or combining, by the fusion portion 48, the plurality occupancy grids. More specifically, the method may comprise fusing, or combining, by the fusion module the first to third occupancy grids, or occupancy grids 68. This fusion may be achieved by fusing together abstract network features, e.g. fusing hidden layers of the network that represent the occupancy grids. The fusion may be based on the relative position identified by the odometry 36. The output from the fusion portion 48 may be a single occupancy grid.

The method may comprise generating, using the prediction portion 50, future states of the fused occupancy grids from the tracking module. The future states may be provided in the form of a prediction grid 90. The prediction grid 90 may include a plurality of segments each labelled with a future state, and at least the future states of the objects and their velocity possibilities.

The method may comprise generating, using the planning portion 52, a trajectory (or trajectories) for the AV 10 from the future states of the fused occupancy grids, or from the prediction grid 90. The trajectory may be provided in the form of a planning grid 92. The planning grid may include the AV 10 and possible future positions 94 and velocities.

The method may comprise receiving, by the tracking module 38, the plurality of objects identified from sensor inputs. More specifically, the method may comprise, extracting, from a hidden layer, or layers, at the end of the object identification portion 64, the plurality of occupancy grids. For instance, the fused occupancy grid may be extracted from the fusion portion 48. A plurality of objects may be extracted from the fused occupancy grid. In addition, a plurality of objects may be extracted from each of the first to third occupancy grids. The extraction may be performed by clustering, for example.

The fusion by the tracking module 38 may comprise fusing the first, second, and third sets of objects, or occupancy grids, and the fused occupancy grid from the fusion portion 48. The fusing of the plurality of objects may also be based on the localisation of the AV 10 from the localisation module 34, and preferably also based on the position of the AV 10 from the odometry module 36.

The method may also comprise, generating, using the prediction module 40, future states of the plurality of objects based on the fused objects from the tracking module 38. The fusing may be based also on the localisation of the AV 10 from the localisation module 34 and also preferably on the relative position of the AV 10 from the odometry module 36. Such fusing may comprise generating, using the prediction module 40, future states of the plurality of objects from the fused objects from the tracking module and the future states of the fused objects by the prediction module of the end-to-end network. In this way, the prediction module 40 may have a seed from the end-to-end network indicating what the predicted future states of objects may be. Therefore, the prediction from the prediction module 40 would be less likely to diverge from the future states predicted from the prediction portion 50. The future states from the prediction portion 50 of the end-to-end network may be provided in the form of a prediction grid 90, or grids. The prediction grid 90, or grids, includes the same layout of segments as the occupancy grids, where each segment is labelled with a future state. The future states may be extracted from a hidden layer of the end-to-end network, which is a hidden layer at an output of the prediction portion 50. This may involve extracting the prediction grid 90, or grids, as the hidden layer, and then extracting the future states of objects from the prediction grid 90, or grids. Extracting the future states of objects may be achieved by clustering.

The method may comprise generating, using the planning module 42, a further trajectory, or trajectories, for the AV 10 based on the fused plurality of objects and the trajectory, or trajectories, generated by the end-to-end network. The generating of the further trajectory may be based on the localisation from the localisation module 34 and may also be based on the relative position of the AV 10 based on the odometry 36. More specifically, the method may comprise generating, using the planning module 42, the further trajectory for the AV 10 using the trajectory and the future states of the plurality of objects. The future states may be predictions of future object positions and future objects' velocities. In this way, the planning module 42 may be able to determine a trajectory, based on the trajectory from the planning portion 52 of the end-to-end network 32. This trajectory from the planning portion 52 may be a plurality of trajectory proposals, and may be extracted from a final, or output, layer from the end-to-end network.

The method may also comprise generating, using the control module 44, a control command based on the further trajectory. The control command may be configured to operate one or more of the actuators 22 of the AV 10 (see Figure 1) for moving the AV 10. In some embodiments, the control command may configure the actuators to move the AV 10 along a path to execute the further trajectory. In other embodiments, modifications may be made to the further trajectory, e.g. adjusting the further trajectory to avoid coming too close to other objects, where the adjustment takes place in an independent component of the AV stack. In such cases, the control command may configure the actuators to move the AV 10 to execute the adjusted trajectory.

It should be noted that the end-to-end network 32 is a machine learning model as described above. One or more of the localisation 34, odometry 36, tracking, 38, prediction 40, and planning 42 modules, may be rules-based models. In this way, their output is more predictable and the autonomy stack 30 may be able to have the benefits of using machine learning, e.g. performance improves with the availability of data, and also rules-based models, e.g. less likely to generate incorrect results. In other embodiments, one or more of the localisation 34, odometry 36, tracking, 38, prediction 40, and planning 42 modules, may be, or may additionally contain, machine learning models. The machine learning models may be neural networks.

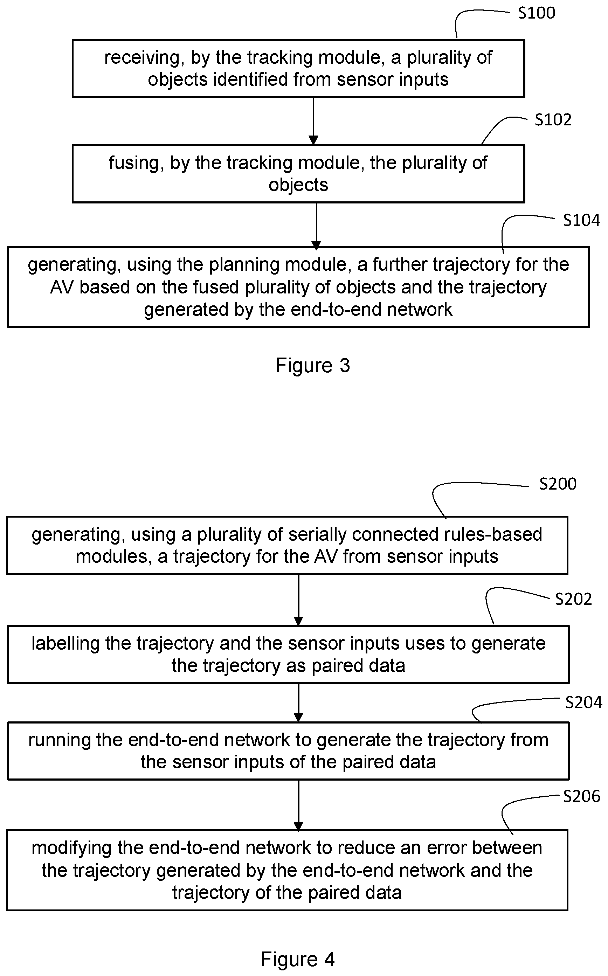

The foregoing embodiments may be summarised with reference to Figure 3. The computer-implemented method is a computer-implemented method of generating a trajectory for an autonomous vehicle, AV, using an autonomy stack, the autonomy stack including an end-to-end network trained to generate a trajectory for the AV from sensor inputs, a tracking module and a planning module, the computer-implemented method comprising: receiving S100, by the tracking module, a plurality of occupancy grids identified based on sensor inputs; fusing S102, by the tracking module, the plurality of objects; and generating S104, using the planning module, a further trajectory for the AV based on the fused plurality of objects and the trajectory generated by the end-to-end network.

According to certain embodiments, the end-to-end network 32 needs to be trained. Training of the end-to-end network may be summarised with reference to Figure 4.

With reference to Figure 4, there is provided a computer-implemented method of training an end-to-end network of an autonomy stack of an AV to generate a trajectory for the AV from sensor inputs, the computer-implemented method comprising: generating S200 a trajectory for the AV from sensor inputs; labelling S202 the trajectory and the sensor inputs uses to generate the trajectory as paired data; and running S204 the end-to-end network to generate the trajectory from the sensor inputs of the paired data; and modifying S206 the end-to-end network to reduce an error between the trajectory generated by the end-to-end network and the trajectory of the paired data. The method may also comprise training each portion of the end-to-end network using a different ground truth. The respective ground truths represent a target for the output of each portion. For example, the ground truth for the object identification portion 46 may be an occupancy grid 68. The ground truth for the prediction portion 50 may be a prediction grid 90, or grids. The ground truth for the planning portion may be a trajectory or trajectories, which may be provided in the form of a planning grid 92, or grids. The respective ground truths may be generated based on outputs of one or more separate components. For example, the separate components may include the tracking module 38, the prediction module 40, and the planning module 42. In other embodiments, the respective ground truths may be generated using other means, for example, manual annotation, simulation, or automatic labelling.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

The following clauses may be useful for understanding the subject-matter of the present disclosure.
1. A computer-implemented method of generating a trajectory for an autonomous vehicle, AV, using an autonomy stack, the autonomy stack including an end-to-end network trained to generate a trajectory for the AV from sensor inputs, a tracking module and a planning module, the computer-implemented method comprising:
   receiving, by the tracking module, a plurality of objects identified based on sensor inputs;
   fusing, by the tracking module, the plurality of objects; and
   generating, using the planning module, a further trajectory for the AV based on the fused plurality of objects and the trajectory generated by the end-to-end network.
2. The computer-implemented method of Clause 1, wherein the receiving the plurality of objects comprises:
   generating, using an object identification portion of the end-to-end network, a plurality of occupancy grids from sensor inputs;
   extracting, from a hidden layer at an end of the object identification portion of the end-to-end network, the plurality of occupancy grids; and
   extracting the plurality of objects from the plurality of occupancy grids.
3. The computer-implemented method of Clause 2, wherein the generating, using the object identification portion of the end-to-end network, the plurality of occupancy grids, comprises:
   populating each segment of a plurality of segments of each occupancy grid with a state,
   wherein the state is selected from a list of states including: obstacle, occlusion, an object including its semantic class and its velocity, road, and pavement.
4. The computer-implemented method of Clause 3, further comprising:
   marking, using the object identification portion of the end-to-end network, a lane boundary and/or a bounding box around the object.
5. The computer-implemented method of any of Clauses 2 to 4, wherein the object identification portion of the end-to-end network comprises a vision portion, a LiDAR portion, and a RADAR portion, and wherein the sensor inputs include images, laser point cloud, and a LiDAR point cloud, wherein the generating, using the object identification portion of the end-to-end network, the plurality of occupancy grids comprises:
   identifying, using the vision portion, a first occupancy grid of the plurality of occupancy grids from the images;
   identifying, using the LiDAR portion, a second occupancy grid of the plurality of occupancy grids from the LiDAR point cloud; and
   identifying, using the RADAR portion, a third occupancy grid of the plurality of occupancy grids from the RADAR point cloud.
6. The computer-implemented method of any of Clauses 2 to 5, further comprising:
   fusing, using a temporal fusion portion of the end-to-end network, the first, second, and third, occupancy grids; and
   extracting a plurality of objects from the occupancy grid fused by the temporal fusion portion,
   wherein the fusing, by the tracking module, the plurality of objects further comprises fusing, by the tracking module, the plurality of objects extracted from the plurality of occupancy grids, and the plurality of objects extracted from the occupancy grid fused using the temporal fusion portion of the end-to-end network.
7. The computer-implemented method of any preceding clause, wherein the autonomy stack includes a prediction module, wherein the computer-implemented method further comprises:
   generating, using the prediction module, future states of the plurality of objects based on the fused objects from the tracking module,
   wherein the generating, using the planning module, a further trajectory for the AV based on the fused plurality of objects and the trajectory generated by the end-to-end network comprises:
      generating, using the planning module, the further trajectory for the AV using the trajectory and the future states of the plurality of objects from the prediction module,
      wherein the future states include future object position and future object velocity.
8. The computer-implemented method of Clause 7, further comprising:
   generating, using a prediction portion of the end-to-end network, future states of the fused occupancy grids from the object identification portion;
   extracting future states of a plurality of objects from the future states of the fused occupancy grids; and
   generating, using a planning portion of the end-to-end network, the trajectory from the future states of the fused occupancy grids,
   wherein the generating, using the prediction module, future states of the plurality of objects from the tracking module comprises:
      generating, using the prediction module, future states of the plurality of objects from the plurality of objects fused by the tracking module and the future states of the plurality of objects extracted from the future states of the plurality of objects from the prediction portion of the end-to-end network.
9. The computer-implemented method of Clause 7 or Clause 8, wherein the prediction module is a rules-based model and/or the tracking module is a rules based model, and/or the planning module is a rules-based model.
10. The computer-implemented method of any preceding clause, wherein the autonomy stack further comprises a control module, the computer-implemented method further comprising:
   generating, using the control module, a control command based on the further trajectory, the control command configured to operate one or more actuators of the AV for moving the AV.
11. The computer-implemented method of Clause 7, or any clause dependent thereon, further comprising:
   generating, using an odometry module, a relative position of the AV,
   wherein, the fusing, by the tracking module, the plurality of objects is based on the relative position of the AV,
   wherein the generating, using the prediction module, future states of the plurality of objects is based on the relative position of the AV,
   wherein the generating, using the planning module, the further trajectory for the AV is based on the relative position of the AV.
12. The computer-implemented method of Clause 7, or any clause dependent thereon, further comprising:
   generating, using a localisation module, a position of the AV,
   wherein, the fusing, by the tracking module, the plurality of objects is based on the position of the AV,
   wherein the generating, using the prediction module, future states of the plurality of objects is based on the position of the AV,
   wherein the generating, using the planning module, the further trajectory for the AV is based on the position of the AV.
13. A computer-implemented method of training an end-to-end network of an autonomy stack of an AV to generate a trajectory for the AV from sensor inputs, the computer-implemented method comprising:
   generating a trajectory for the AV based on sensor inputs;
   labelling the trajectory and the sensor inputs used to generate the trajectory as paired data;
   running the end-to-end network to generate the trajectory from the sensor inputs of the paired data; and
   modifying the end-to-end network to reduce an error between the trajectory generated by the end-to-end network and the trajectory of the paired data.
14. A transitory, or non-transitory, computer-readable medium having instructions stored thereon that when executed by a processor, cause the processor to perform the computer-implemented method of any preceding clause.
15. An autonomy stack for an autonomous vehicle, AV, the autonomy stack comprising:
   an end-to-end network trained to generate a trajectory for the AV from sensor inputs;
   a tracking module configured to receive a plurality of objects identified based on sensor inputs and to fuse the plurality of objects; and
   a planning module configured to generate a further trajectory for the AV based on the used plurality of objects and the trajectory generated by the end-to end network.
16. An autonomous vehicle including: storage having the non-transitory computer-readable medium of Clause 14, or the autonomy stack of Clause 15, stored thereon;
   a processor to execute the instructions or the autonomy stack; and
   one or more actuators configured to move the AV based on the further trajectory.

## Claims

1. A computer-implemented method of training an end-to-end network of an autonomy stack of an AV to generate a trajectory for the AV from sensor inputs, the computer-implemented method comprising:
providing an end-to-end network comprising a plurality of serially connected portions;
generating a plurality of ground truths; and
training each portion of the end-to-end network using a different ground truth of the plurality of ground truths.

2. The computer-implemented method of any preceding claim, wherein the serially connected portions further comprise:
the plurality of portions being connected in series such that an output layer of one portion is provided as an input to an input layer of another portion.

3. The computer-implemented method of Claim 1 or Claim 2, wherein the plurality of serially connected portions comprises:
an object identification portion;
a prediction portion; and
a planning portion.

4. The computer-implemented method of Claim 3, wherein generating a plurality of ground truths comprises:
generating, using sensor inputs, a ground truth for the object identification portion,
wherein the ground truth is an occupancy grid.

5. The computer-implemented method of Claim 4, wherein generating, using sensor inputs, a ground truth for the object identification portion comprises:
generating the ground truth based on an output of at least one separate component, wherein the separate component comprises a tracking module.

6. The computer-implemented method of any of Claims 3 to 5, wherein generating a plurality of ground truths comprises:
generating, using the sensor inputs, a ground truth for the prediction portion,
wherein the ground truth is a prediction grid.

7. The computer-implemented method of Claim 6, wherein generating, using the sensor inputs, a ground truth for the prediction portion comprises:
generating the ground truth based on an output of at least one separate component, wherein the separate component comprises a prediction module.

8. The computer-implemented method of any of Claims 3 to 7, wherein generating a plurality of ground truths comprises:
generating, using the sensor inputs, a ground truth for the planning portion, wherein the ground truth is at least one trajectory.

9. The computer-implemented method of Claim 8, wherein the at least one trajectory is at least one planning grid.

10. The computer-implemented method of Claim 8 or Claim 9, wherein generating, using the sensor inputs, a ground truth for the planning portion comprises:
generating the ground truth based on an output of at least one separate component, wherein the separate component comprises a planning module.

11. The computer-implemented method of any preceding claim, wherein each portion of the plurality of portions is defined by a plurality of layers of the end-to-end network.

12. A transitory, or non-transitory, computer-readable medium having instructions stored thereon that when executed by at least one processor causes the at least one processor to perform the computer-implemented method of any preceding claims.
